(19) Europäisches Patentamt
European Patent Office
Office européen des brevets

(11) **EP 1 873 853 A1**

(12) **EUROPEAN PATENT APPLICATION**
published in accordance with Art. 153(4) EPC

(43) Date of publication:
02.01.2008 Bulletin 2008/01

(51) Int Cl.:
*H01M 8/02* (2006.01)   *H01M 4/86* (2006.01)
*H01M 4/90* (2006.01)   *H01M 8/10* (2006.01)

(21) Application number: 06731721.4

(22) Date of filing: 06.04.2006

(86) International application number:
PCT/JP2006/307785

(87) International publication number:
WO 2006/109837 (19.10.2006 Gazette 2006/42)

(84) Designated Contracting States:
DE FR GB IT

(30) Priority: 06.04.2005 JP 2005109734

(71) Applicant: TOYOTA JIDOSHA KABUSHIKI
KAISHA
Toyota-shi,
Aichi-ken, 471-8571 (JP)

(72) Inventor: SEKINE, Shinobu
TOYOTA JIDOSHA KABUSHIKI KAISHA
Toyota-shi, Aichi 4718571 (JP)

(74) Representative: TBK-Patent
Bavariaring 4-6
80336 München (DE)

(54) **FUEL CELL**

(57)    A fuel cell (100) capable of improving durability is provided. The fuel cell includes an electrolyte membrane (1), catalyst layers (2a, 2b) stacked on both sides of the electrolyte membrane (1), respectively, anddiffusionlayers (3a, 3b) stacked outside of the respective catalyst layers (2a, 2b). A stacked surface of each of the catalyst layers (2a, 2b) is smaller than a stacked surface of the electrolyte membrane (1), and a stacked surface of each of the diffusion layers (3a, 3b) is larger than the stacked surface of each of the catalyst layers (2a, 2b) and smaller than the stacked surface of the electrolyte membrane (1). If a surface of the electrolyte membrane (1) which surface is to contact with one of the catalyst layers (2a, 2b) is A1 and a surface of the electrolyte membrane (1) which surface is out of contact with one of the catalyst layers (2a, 2b) and on which a space is formed between the electrolyte membrane (1) and one of the diffusion layer is A2, the surface A2 contains a single metal element having a hydrogen-peroxide decomposing performance and/or a compound containing the single metal element.

## Fig. 1A

(Cont. next page)

# Fig. 1B

1

A2                A1                A2

A2                A1                A2

**Description**

Technical Field

The present invention relates to a fuel cell and particularly relates to a fuel cell capable of improving durability.

Background Art

In a fuel cell, electric energy generated by an electrochemical reaction produced in a membrane electrode assembly (hereinafter, "MEA") that includes an electrolyte layer (hereinafter, "electrolyte membrane") and electrodes (i.e., an anode and a cathode) arranged on both sides of the electrolyte membrane is extracted to an outside of the fuel cell via separators arranged on both sides of the MEA, respectively. Among fuel cells, a solid polymer electrolyte fuel cell (hereinafter, "PEFC (polymer electrolyte fuel cell)") used in a home cogeneration system, a motorcar or the like is operable in a low temperature region. Furthermore, because of its high energy conversion efficiency and short start-up time as well as a small-sized and light weight system, the PEFC is expected as an optimum power source of a battery car or a portable power supply.

A unit cell of the PEFC includes an electrolyte membrane, a cathode and an anode each including at least a catalyst layer, and separators. A reaction gas containing hydrogen is supplied to the anode of the PEFC and a reaction gas containing oxygen is supplied to the cathode thereof. An electrochemical reaction is produced on a three-phase interface formed by these reaction gases, a catalyst (e.g., Pt) contained in the catalyst layers, and electrolyte components. This electrochemical reaction enables the unit cell of the PEFC to gain an electromotive force of, for example, about 0.7 volt (V). However, such an electromotive force is insufficiently low as a power source of the battery car or the like. Due to this, a stack fuel cell configured by arranging end plates or the like on both ends of a stacked body, in which a plurality of unit cells is stacked in series in a stacking direction, is normally used as a power source.

Meanwhile, the following fact has gradually become clear. Hydrogen peroxide is produced in the catalyst layers in each unit cell of the fuel cell, and OH radicals or the like produced from the hydrogen peroxide result in oxidation degradation in the polymer electrolyte of the MEA. The oxidation degradation causes deterioration in a durability of the fuel cell. Therefore, it is desired to suppress the degradation by reducing the hydrogen peroxide in the MEA and to improve the durability of the fuel cell.

Techniques intended to improve the durability of the fuel cell have been conventionally disclosed. For example, Japanese Patent Application Laid-Open No. 2003-109623 discloses a technique relating to a polymer electrolyte fuel cell characterized in that at least one of a pair of catalyst layers arranged to put an electrolyte membrane therebetween contains a perfluorocarbon sulfonic acid-based polymer electrolyte and molecules lower in bond energy than carbon-fluorine bond. With the disclosed technique, it is possible to provide a high durability polymer electrolyte fuel cell having greatly improved oxidation resistance against peroxide radicals or hydroxyl radicals.

In the PEFC, a stacked surface of each of the catalyst layers generally differs from that of the electrolyte membrane and that of each diffusion layer in shape and size. Due to this, spaces (gaps) tend to be formed on ends of the electrolyte membrane. Further, while the fuel cell operates, water is produced by the electrochemical reaction and hydrogen peroxide is produced as a secondary product by a side reaction. If the hydrogen peroxide is present in the spaces formed on the ends of the electrolyte membrane (hereinafter, sometimes "spaces between the electrolyte membrane and the diffusion layers"), the electrolyte membrane may possibly degrade.

The technique disclosed in the Japanese Patent Application Laid-Open No. 2003-109623 is characterized in that molecules having excellent oxidation resistance performance are contained in the catalyst layers. Although it is possible to express the oxidation resistance performance in the catalyst layers, it is difficult to express it on the ends of the electrolyte membrane. In other words, even with the technique disclosed in the Japanese Patent Application Laid-Open No. 2003-109623, it is disadvantageously difficult to prevent occurrence of the oxidation degradation on the ends of the electrolyte membrane and to improve the durability of the fuel cell.

It is an object of the present invention to provide a fuel cell capable of improving durability.

Disclosure of the Invention

To attain the object, the present invention takes a following solution. According to one aspect of the present invention, there is provided a fuel cell comprising: an electrolyte membrane; catalyst layers stacked on both sides of the electrolyte membrane; and diffusion layers stacked outside of the respective catalyst layers, wherein a stacked surface of each of the catalyst layers is smaller than a stacked surface of the electrolyte membrane, and a stacked surface of each of the diffusion layers is larger than the stacked surface of each of the catalyst layers and smaller than the stacked surface of the electrolyte membrane, and if a surface of the electrolyte membrane which surface is to contact with one of the catalyst layers is A1 and a surface of the electrolyte membrane which surface is out of contact with one of the catalyst layers and on which a space is formed between the electrolyte membrane and one of the diffusion layer is A2, a single metal element having a hydrogen-peroxide decomposing performance and/or a compound containing the single metal element is provided on the surface A2.

The "stacked surface" means a flat surface a normal direction of which is a stacking direction of catalyst layers. Further, in the present invention, the expression "a single metal element having a hydrogen-peroxide decomposing performance and/or a compound containing the single metal element is provided on the surface A2" indicates a concept encompassing a configuration in which only a single metal element having a hydrogen-peroxide decomposing performance and/or a compound containing the single metal element is provided on the surface and a configuration in which a single metal element having a hydrogen-peroxide decomposing performance and/or a compound containing the single metal element is contained in a matter arranged on the surface A2. Besides, specific examples of the metal element having the hydrogen-peroxide decomposing performance include Mn, Fe, Pt, Pd, Ni, Cr, Cu, Ce, Sc, Rb, Co, Ir, Ag, Au, Rh, Ti, Zr, Al, Hf, Ta, Nb, and Os. Specific examples of the compound include oxides and the like each containing the metal element.

According to the aspect of the present invention, an adhesive material layer may be arranged on the surface A2.

According to the aspect (including modifications; the same shall apply hereafter) of the present invention, the single metal element having the hydrogen-peroxide decomposing performance and/or the compound containing the single metal element may be provided on the adhesive material layer.

According to the aspect of the present invention, the single metal element having the hydrogen-peroxide decomposing performance and/or the compound containing the single metal element is provided on each of the catalyst layers.

Effect of the Invention

According to one aspect of the present invention, even if water is gathered in the spaces formed on the ends of the electrolyte membrane and hydrogen peroxide is gathered in the water, it is possible to decompose the hydrogen peroxide present in the spaces formed on the ends of the electrolyte membrane. This is because a single metal element having a hydrogen-peroxide decomposing performance and/or a compound containing the single metal element (hereinafter, simply "hydrogen-peroxide decomposing matter") is provided on the surface A2. Therefore, the present invention can provide the fuel cell capable of improving its durability.

In the aspect of the present invention, if the adhesive material layer is arranged on the surface A2, the spaces formed on the ends of the electrolyte membrane can be closed by the respective adhesive material layers. Accordingly, by reducing the water gathered on the ends of the electrolyte membrane, the amount of the hydrogen peroxide gathered in the spaces can be reduced. Even if the water is gathered in the space and the water contains the hydrogen peroxide, the hydrogen peroxide can be decomposed by the hydrogen-peroxide decomposing matter provided on the surfaces A2 of the electrolyte membrane.

Moreover, in the aspect of the present invention, if a hydrogen-peroxide decomposing matter is provided on the adhesive material layer, the hydrogen peroxide gathered on the ends of the electrolyte membrane can be decomposed by the hydrogen-peroxide decomposing matter provided on the adhesive material layer. It is, therefore, possible to provide the fuel cell capable of effectively improving its durability by being configured as stated above.

Further, in the aspect of the present invention, if a hydrogen-peroxide decomposing matter is provided on each of the catalyst layers, it is possible to decompose the hydrogen peroxide more effectively. By configuring the fuel cell as stated above, therefore, the durability of the fuel cell can be further improved.

Brief Description of the Drawings

Fig. 1 is a cross-sectional view schematically showing a fuel cell according to a first embodiment of the present invention and an electrolyte membrane of the fuel cell;
Fig. 2 is a cross-sectional view schematically showing a fuel cell according to a second embodiment of the present invention;
Fig. 3 is a cross-sectional view schematically showing a fuel cell according to a third embodiment of the present invention; and
Fig. 4 is a cross-sectional view schematically showing a conventional fuel cell.

In the attached Figures, reference numeral 1 denotes an electrolyte membrane, reference numeral 2a denotes an anode catalyst layer, reference numeral 2b denotes a cathode catalyst layer, reference numeral 3a denotes an anode diffusion layer, reference numeral 3b denotes a cathode diffusion layer, reference numeral 10 denotes a cerium oxide-based layer (a layer contain the hydrogen-peroxide decomposing matter), reference numerals 20 and 21 denote an adhesive material layer, and reference numerals 100, 200 and 300 denote a fuel cell.

Best Mode for Carrying out the Invention

While an electrochemical reaction in which protons and electrons are produced from hydrogen occurs to an anode of a PEFC, water is produced in a cathode thereof by a reaction of oxygen with electrons moving through an external circuit and protons passing through an electrolyte membrane. It is known, however, that when the PEFC is actually actuated, a side reaction occurs in addition to these main reactions and hydrogen peroxide is produced by the side reaction. If iron ions or the like are present in the PEFC, then OH radicals or the like are produced from the hydrogen peroxide, and the OH radicals or the like cause an oxidation degradation in electrolyte components included in the electrolyte membrane or the like. It is to be noted that the hydrogen peroxide produced in the PEFC can be moved along with the water produced by the electrochemical reaction in the PEFC (hereinafter, often "produced water") during diffusion or the like.

Meanwhile, a stacked surface of the electrolyte membrane in the PEFC is generally larger than that of a catalyst layer. If a unit cell of the PEFC is generated using these constituent elements, spaces (gaps) tend to be formed on ends of the electrolytemembrane. In the spaces, not only the water produced during operation of the PEFC but also the hydrogen peroxide tends to be gathered. Due to this, OH radicals or the like are easily produced on the ends of the electrolyte membrane and the ends of the electrolyte membrane are susceptible to oxidation degradation.

The present invention has been made to solve the above-stated problems. It is an object of the present invention to provide a fuel cell capable of improving durability by being configured so that a hydrogen-peroxide decomposing matter is provided on a surface of an electrolyte membrane which surface is out of contact with each of catalyst layers and on which surface a space is formed between the electrolyte membrane and each of diffusion layers.

To facilitate understanding the present invention, a conventional fuel cell will first be described.

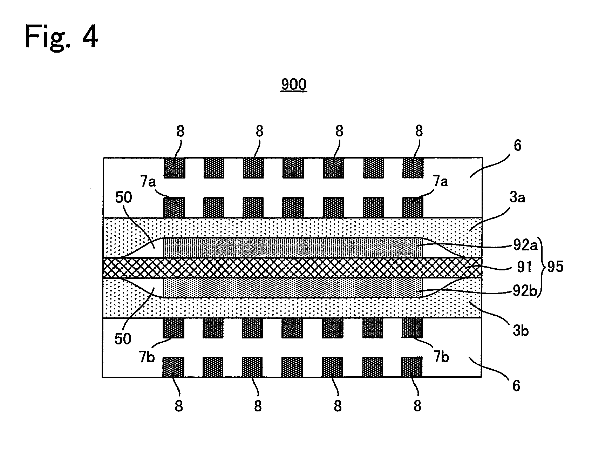

Fig. 4 is a cross-sectional view schematically showing a conventional fuel cell. In Fig. 4, a vertical direction corresponds to a stacking direction of catalyst layers. As shown in Fig. 4, a conventional fuel cell 900 includes a MEA 95 that includes an electrolyte membrane 91 and an anode catalyst layer 92a and a cathode catalyst layer 92b which are arranged on both sides of the electrolyte membrane 91, respectively, an anode diffusion layer 3a and a cathode diffusion layer 3b arranged on both sides of the MEA 95, respectively, and separators 6, 6 arranged outside of the anode diffusion layer 3a and the cathode diffusion layer 3b, respectively. Each of the anode catalyst layer 92a and the cathode catalyst layer 92b contains, for example, carbon particles supporting platinum (hereinafter, "platinum-supporting carbon") functioning as a catalyst of an electrochemical reaction. Each of the anode diffusion layer 3a and the cathode diffusion layer 3b is made of, for example, carbon paper containing carbon fiber, and a clamping pressure is applied to the electrolyte membrane 91 via the separators 6, 6. In the separators 6, 6 arranged outside of the MEA 95, reaction gas supply passages 7a, 7a, ... and 7b, 7b, ... are formed on the anode diffusion layer 3a-side and the cathode diffusion layer 3b-side, respectively. A hydrogen-based matter (hereinafter, "hydrogen") is supplied to the reaction gas supply passages 7a, 7a, ... whereas an oxygen-based matter (hereinafter, "air") is supplied to the reaction gas supply passages 7b, 7b, .... Cooling medium channels 8, 8, ... are formed on opposite sides of the respective separators 6, 6 to the reaction gas supply passages 7a and 7b-sides.

During power generation of the fuel cell 900, part of the hydrogen, for example, supplied from the reaction gas supply passages 7a, 7a, ... is transmitted by the electrolyte membrane 91 and reaches the cathode catalyst layer 92b, so that hydrogen gas and oxygen gas often coexist in the cathode catalyst layer 92b. Generally, a cathode of a fuel cell is in an environment of a potential of about 0.4 V to 1.0 V. If oxygen is reduced on the platinum-supporting carbon in this environment, then hydrogen peroxide is produced, and OH radicals resulting from the hydrogen peroxide are produced, accordingly. Furthermore, the cathode diffusion layer 3b is made of carbon fiber as stated. Due to this, even if oxygen is reduced on the carbon fiber, then hydrogen peroxide is produced and OH radicals or the like resulting from the hydrogen peroxide are produced.

Meanwhile, as shown in Fig. 4, in the fuel cell 900, spaces 50, 50, ... are formed on ends of the electrolyte membrane 91. While the fuel cell 900 operates, not only the produced water but also the hydrogen peroxide tends to be gathered in the spaces 50, 50, .... As a result, the ends of the electrolyte membrane 91 are easily degraded by the OH radicals or the like and damaged. If the electrolyte membrane 91 is damaged, a voltage of the fuel cell 900 falls, resulting in deterioration in power generation performance of the fuel cell 900. It is, therefore, preferable to suppress degradation of the electrolyte membrane and to improve the durability of the fuel cell by suppressing the hydrogen peroxide that causes the damage on the electrolyte membrane from being produced.

A fuel cell according to the present invention will be described more specifically with reference to the accompanying drawings.

1. First Embodiment

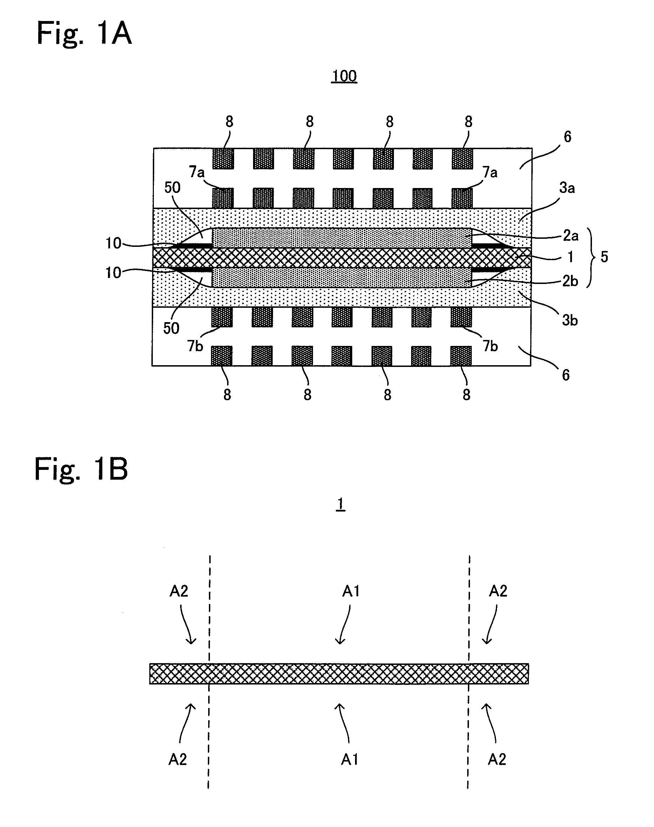

Fig. 1 is a cross-sectional view schematically showing a fuel cell according to a first embodiment of the present invention and an electrolyte membrane of the fuel cell, respectively. In Fig. 1, vertical direction corresponds to a stacking direction of catalyst layers. More specifically, Fig. 1A is a cross-sectional view schematically showing the fuel cell according to the first embodiment of the present invention. Fig. 1B is a cross-sectional view showing only the electrolyte membrane shown in Fig. 1A. In Fig. 1, constituent elements or regions similar in configuration to those of the conventional fuel cell shown in Fig. 4 are denoted by the same reference symbols as those used in Fig. 4 and will not be often described herein. Furthermore, the anode catalyst layer and the cathode catalyst layer are often referred to simply "catalyst layers".

As shown in Fig. 1A, a fuel cell 100 according to the first embodiment includes an MEA 5 that includes an electrolyte membrane 1 and an anode catalyst layer 2a and a cathode catalyst layer 2b which are arranged on both sides of the electrolyte membrane 1, respectively, an anode diffusion layer 3a and a cathode diffusion layer 3b arranged on both sides of the MEA 5, respectively, and separators 6, 6 arranged outside of the anode diffusion layer 3a and the cathode diffusion layer 3b, respectively. Each of the anode catalyst layer 2a and the cathode catalyst layer 2b contains, for example, not only platinum-supporting carbon but also a hydrogen-peroxide decomposing matter (hereinafter, often "cerium oxide"). Each of the anode diffusion layer 3a and the cathode diffusion layer 3b is made of, for example, carbon paper containing carbon fiber. By arranging cerium oxide-based layers 10, 10, ... on surfaces of the electrolytemembrane 1 which surface constitute respective spaces 50, 50, ... formed on ends of the electrolyte membrane 1, the hydrogen-peroxide decomposing matter is provided on the surfaces.

In the fuel cell 100, the spaces 50, 50, ... are formed on the ends of the electrolyte membrane 1 as stated. Due to this, while the fuel cell 100 operates, not only produced water but also hydrogen peroxide tends to be gathered in the spaces 50, 50, .... However, in the fuel cell 100 according to the first embodiment, the cerium oxide-based layers 10, 10, ... are provided on the surfaces of the electrolyte membrane 1 constituting the respective spaces 50, 50, .... Due to this, the fuel cell 100 can decompose the hydrogen peroxide possibly present in the spaces 50, 50, .... As a consequence, it is possible to suppress the ends of the electrolyte membrane 1 from being damaged.

Moreover, the catalyst layers 2a and 2b according to the first embodiment contain the cerium oxide as stated above. Due to this, the fuel cell 100 can also decompose hydrogen peroxide present in regions other than the spaces 50, 50, ..., e.g., the anode catalyst layer 2a and the cathode catalyst layer 2b. By so configuring, it is possible to prevent oxidation degradation in the fuel cell. It is thereby possible to provide the fuel cell capable of improving its durability.

A surface A1 of the electrolyte membrane 1 which surface is to contact with the catalyst layer and a surface A2 of the electrolyte membrane 1 which surface is out of contact with the catalyst layer and on which surface the space is formed between the electrolyte membrane and the diffusion layer will next be described with reference to Figs. 1A and 1B.

Fig. 1B is an enlarged view showing only the electrolyte membrane 1 included in the fuel cell 100 shown in Fig. 1A. As shown in Fig. 1A, the fuel cell 100 according to the first embodiment includes the catalyst layers smaller in stacked surface than the electrolyte membrane similarly to the conventional fuel cell 900. Due to this, each of both surfaces of the electrolyte membrane 1 can be divided into the surface A1 which is to contact with the catalyst layer 2a or 2b and surfaces A2 which are out of contact with the catalyst layer 2a or 2b and on which surfaces the spaces are formed between the electrolyte membrane 1 and the diffusion layer (see Fig. 1B). The other embodiments of the present invention will be described while appropriately using the expressions of the surfaces A1 and A2.

## 2. Second Embodiment

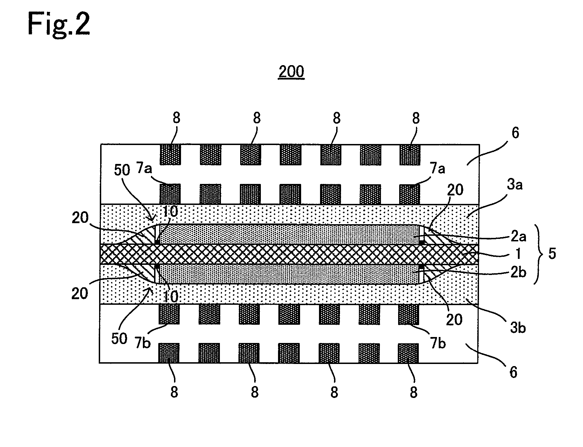

Fig. 2 is a cross-sectional view schematically showing a fuel cell according to a second embodiment of the present invention. In Fig. 2, vertical direction corresponds to a stacking direction of catalyst layers. In Fig. 2, constituent elements or regions similar in configuration to those of the conventional fuel cell shown in Fig. 1 are denoted by the same reference symbols as those used in Fig. 1 and will not be often described herein.

As shown in Fig. 2, a fuel cell 200 according to the second embodiment includes an MEA 5 that includes an electrolyte membrane 1 and an anode catalyst layer 2a and a cathode catalyst layer 2b which are arranged on both sides of the electrolyte membrane 1, respectively, an anode diffusion layer 3a and a cathode diffusion layer 3b arranged on both sides of the MEA 5, respectively, and separators 6, 6 arranged outside of the anode diffusion layer 3a and the cathode diffusion layer 3b, respectively. On each of the surfaces A2 of the electrolyte membrane 1 which surfaces constituting respective spaces 50, 50, ... formed on ends of the electrolyte membrane 1, a cerium oxide-based layer 10, 10, ... is arranged. In addition, an adhesive material layer 20, 20 ... made of a conductive material such as VYLON containing carbon filler is arranged in each space 50, 50, ... on the surface A2. (VYLON is a registered trademark of Toyobo Co., Ltd.; the same shall apply hereafter.)

As shown in Fig. 2, in the fuel cell 200 according to the second embodiment, the adhesive material layers 20, 20 ... are arranged in the respective spaces 50, 50, ... formed on the ends of the electrolyte membrane 1. Due to this, a gap formed in each of the spaces 50, 50, ... according to the second embodiment is smaller than that formed in each of the spaces 50, 50, ... according to the first embodiment. Therefore, in the fuel cell 200, produced water and hydrogen peroxide are difficult to gather on the ends of the electrolyte membrane 1. It is, therefore, possible to easily suppress oxidation degradation in the ends of the electrolyte membrane 1. Furthermore, even if the produced water is gathered in a narrow gap formed in each space 50, 50, ..., it is possible to effectively decompose hydrogen peroxide on the ends of the electrolyte membrane 1 because the cerium oxide-based layers 10, 10, ...are formed on the respective surfaces A2 of the electrolyte membrane 1 according to the second embodiment. By so configuring, it is possible to provide the fuel cell capable of effectively improving the durability.

## 3. Third Embodiment

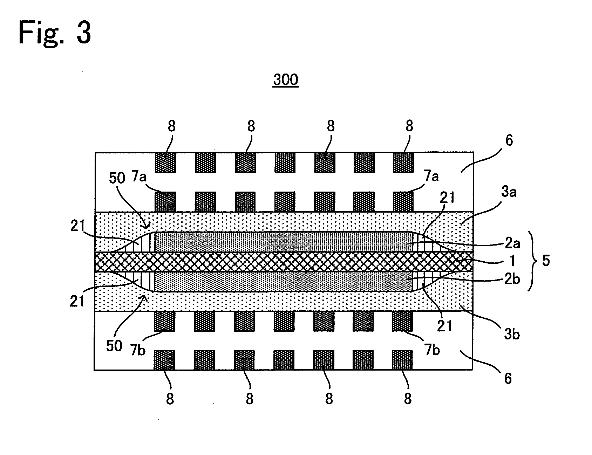

Fig. 3 is a cross-sectional view schematically showing a fuel cell according to a third embodiment of the present invention. In Fig. 3, vertical direction corresponds to a stacking direction of catalyst layers. In Fig. 3, constituent elements or regions similar in configuration to those of the conventional fuel cell shown in Fig. 2 are denoted by the same reference symbols as those used in Fig. 2 and will not be often described herein.

As shown in Fig. 3, a fuel cell 300 according to the third embodiment includes an MEA 5 that includes an electrolyte membrane 1 and an anode catalyst layer 2a and a cathode catalyst layer 2b which are arranged on both sides of the electrolyte membrane 1, respectively, an anode diffusion layer 3a and a cathode diffusion layer 3b arranged on both sides of the MEA 5, respectively, and separators 6, 6 arranged outside of the anode diffusion layer 3a and the cathode diffusion layer 3b, respectively. On each of surfaces A2, A2, ... of the electrolyte membrane 1 constituting respective spaces 50, 50, ... formed on ends of the electrolyte membrane 1, an adhesive material layer 21, 21, ... is arranged. The adhesive material layer 21, 21, ... is formed by, for example, dispersing cerium oxide in a conductive material such as VYLON containing carbon filler.

In this manner, in the fuel cell 300 according to the third embodiment, the adhesive material layers 21, 21, ... containing the cerium oxide that is a hydrogen-peroxide decomposing matter are arranged in the respective spaces 50, 50, ... formed on the ends of the electrolyte membrane 1. It is, therefore, possible to decompose hydrogen peroxide possibly present in the spaces 50, 50, ... using the hydrogen-peroxide decomposing matter contained in the respective adhesive material layers 21, 21, ... (or ions or the like eluted from the hydrogen-peroxide decomposing matter). By so configuring, it is possible to effectively improve the durability of the fuel cell 300.

If the adhesive material layers are provided in the fuel cell according to the present invention, a manner of arranging the adhesive material layers is not limited to a specific one as long as the adhesive material layers are arranged to contact with the respective surfaces A2, A2, ...of the electrolyte membrane. Nevertheless, with a view of, for example, effectively improving the durability of the electrolyte membrane 1 and the like by making the gaps in which the produced water and the hydrogen peroxide are possibly gathered as small as possible, it is preferable to arrange the adhesive material layers so as to be able to almost completely close the respective spaces 50, 50,

Moreover, if the adhesive material layers are provided in the fuel cell according to the present invention, a glass transition temperature T1 of the adhesive material layers is not limited to a specific one. Nevertheless, with a view of, for example, enabling easily manufacturing a fuel cell by making it possible to integrate the MEA with the diffusion layers by thermocompression bonding, it is preferable to satisfy a condition of T1<T2, where T2 is a glass transition temperature of the electrolyte membrane. If the adhesive material layers satisfying the condition of T1<T2 are used, it is possible to manufacture a fuel cell in which a MEA can be integrated with diffusion layers by thermocompression bonding even if the fuel cell includes a hydrocarbon-based electrolyte membrane. It is thereby possible to facilitate manufacturing the fuel cell.

Furthermore, if the adhesive material layers are provided in the fuel cell according to the present invention, a method of arranging the adhesive material layers on the respective surfaces A2, A2, ... of the electrolyte membrane is not limited to a specific one. Nevertheless, with a view of, for example, enabling easy and sure arrangement, it is preferable to arrange the adhesive material layers using a syringe or the like. If the adhesive material layers are arranged using a syringe, it is preferable to satisfy the following condition, where symbol r denotes a diameter of a needle hole of the syringe, symbol $\mu$ denotes a modulus of elasticity of each of the diffusion layers, and symbol d denotes a thickness of each of the catalyst layers.

$$r \cong \sqrt{\frac{d^3}{\pi\mu}}$$

If the syringe satisfying this condition is used, the adhesive material layers by the amount of which the spaces 50, 50, ... can be closed almost completely can be easily arranged on the respective surfaces A2, A2, .... Therefore, it is possible to provide the fuel cell capable of effectively suppressing the oxidation degradation in the electrolyte membrane.

In the first to third embodiments, the instance in which the catalyst layers contain the hydrogen-peroxide decomposing matter has been described. However, the catalyst layers according to the present invention are not limited to those described therein. Alternatively, the fuel cell may include catalyst layers each of which does not contain the hydrogen-peroxide decomposing matter. Nevertheless, with a view of providing the fuel cell capable of effectively decomposing hydrogen peroxide produced as a secondary product while the fuel cell operates, it is preferable that the fuel cell includes catalyst layers each containing the hydrogen-peroxide decomposing matter.

Moreover, in the first to third embodiments, the fuel cell 100 to 300 including the cerium oxide as the hydrogen-peroxide decomposing matter have been described. However, the hydrogen-peroxide decomposing matter included in the fuel cell according to the present invention is not limited to the cerium oxide. Specific examples of the other matter include Mn, Fe, Pt, Pd, Ni, Cr, Cu, Ce, Sc, Rb, Co, Ir, Ag, Au, Rh, Ti, Zr, Al, Hf, Ta, Nb, and Os and/or compounds containing these metal elements.

Furthermore, in the embodiments described above, the fuel cells each including the separators in which the reaction gas supply passages are formed on the MEA side have been described. However, the separators which the fuel cell according to the present invention possibly includes are not limited to those configured as stated above. For example, flat separators in which no reaction gas supply passages are formed on the MEA side may be used. If a fuel cell including such flat separators is to be manufactured, the layers (which are the anode diffusion layer and the cathode diffusion layer in the fuel cells according to the first to third embodiments) which are to contact with the separators may be formed by using a foammetal, e.g., stainless steel, titanium or nickel produced by plating, foaming or the like or a porous material such as a sintered metal so as to be able to supply reaction gases to the layers that are to contact with the separators.

Industrial Applicability

As stated so far, the fuel cell according to the present invention is suited to be used as, for example, a power source of a battery car.

**Claims**

1.  A fuel cell comprising:

    an electrolyte membrane;
    catalyst layers stacked on both sides of the electrolyte membrane; and
    diffusion layers stacked outside of the respective catalyst layers,

    wherein a stacked surface of each of the catalyst layers is smaller than a stacked surface of the electrolyte membrane, and a stacked surface of each of the diffusion layers is larger than the stacked surface of each of the catalyst layers and smaller than the stacked surface of the electrolyte membrane, and if a surface of the electrolyte membrane which surface is to contact with one of the catalyst layers is A1 and a surface of the electrolyte membrane which surface is out of contact with one of the catalyst layers and on which a space is formed between the electrolyte membrane and one of the diffusion layer is A2, a single metal element having a hydrogen-peroxide decomposing performance and/or a compound containing the single metal element is provided on the surface A2.

2.  The fuel cell according to claim 1,
    wherein an adhesive material layer is arranged on the surface A2.

3.  The fuel cell according to claim 2,
    wherein the single metal element having the hydrogen-peroxide decomposing performance and/or the compound containing the single metal element is provided on the adhesive material layer.

4.  The fuel cell according to any one of claims 1 to 3, wherein the single metal element having the hydrogen-peroxide decomposing performance and/or the compound containing the single metal element is provided on each of the catalyst layers.

# Fig. 1A

# Fig. 1B

# Fig.2

Fig. 3

Fig. 4

## INTERNATIONAL SEARCH REPORT

| International application No. |
| --- |
| PCT/JP2006/307785 |

**A. CLASSIFICATION OF SUBJECT MATTER**
*H01M8/02*(2006.01), *H01M4/86*(2006.01), *H01M4/90*(2006.01), *H01M8/10*(2006.01)

According to International Patent Classification (IPC) or to both national classification and IPC

**B. FIELDS SEARCHED**

Minimum documentation searched (classification system followed by classification symbols)
*H01M8/02*(2006.01), *H01M4/86*(2006.01), *H01M4/90*(2006.01), *H01M8/10*(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 10-154521 A (Matsushita Electric Industrial Co., Ltd.), 09 June, 1998 (09.06.98), Full text (Family: none) | 1-4 |
| Y | JP 7-90111 A (Tanaka Kikinzoku Kogyo Kabushiki Kaisha et al.), 04 April, 1995 (04.04.95), Full text & US 5766787 A1          & EP 631337 A2 | 1-4 |
| Y | JP 2005-19232 A (Toyota Central Research And Development Laboratories, Inc. et al.), 20 January, 2005 (20.01.05), Full text (Family: none) | 1-4 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 May, 2006 (09.05.06) | 16 May, 2006 (16.05.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

## INTERNATIONAL SEARCH REPORT

| | International application No. |
|---|---|
| | PCT/JP2006/307785 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-123777 A  (Matsushita Electric Industrial Co., Ltd.), 25 April, 2003 (25.04.03), Full text (Family: none) | 4 |
| Y | JP 2005-63902 A  (Toyota Central Research And Development Laboratories, Inc. et al.), 10 March, 2005 (10.03.05), Full text (Family: none) | 1-4 |
| A | JP 2000-106203 A  (Aisin Seiki Co., Ltd.), 11 April, 2000 (11.04.00), Full text & US 6335112 B1 | 1-4 |

Form PCT/ISA/210 (continuation of second sheet) (April 2005)

**EP 1 873 853 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003109623 A